# EUROPEAN PATENT SPECIFICATION

(11) **EP 4 067 115 B1**
(45) Date of publication and mention of the grant of the patent: **27.12.2023**
(21) Application number: 22161259.1
(22) Date of filing: 10.03.2022
(51) Int. Cl.: B60C 11/00, B60C 11/03

(54) **TIRE**
REIFEN
PNEUMATIQUE

(30) Priority: 30.03.2021 JP 2021057168
(43) Date of publication of application: 05.10.2022
(73) Proprietor: SUMITOMO RUBBER INDUSTRIES, LTD., Kobe-shi, Hyogo 651-0072 (JP)
(72) Inventor: OHTE, Yuto, Kobe-shi, Hyogo 651-0072 (JP); HAGIHARA, Takashi, Kobe-shi, Hyogo 651-0072 (JP); TERASHIMA, Masaki, Kobe-shi, Hyogo 651-0072 (JP)
(74) Representative: Winter, Brandl - Partnerschaft mbB

(56) References cited:
- EP-B1- 0 358 491
- WO-A1-2004/024471
- CN-B- 103 287 214
- JP-A- 2009 241 918
- JP-A- 2015 131 599
- US-A1- 2006 048 874
- US-B2- 8 336 589
- US-B2- 10 946 700

## Description

### BACKGROUND OF THE INVENTION

### Field of the Invention

The present invention relates to a tire.

### Background Art

A tire having low rolling resistance is obtained when a rubber that has low-heat generation properties is used for a tread. The grip force of the rubber that has low-heat generation properties is lower than that of a rubber that has heat generation properties and that can exert a high grip force. Therefore, when a rubber that has low-heat generation properties is used for a tread, for example, braking performance (hereinafter, also referred to as wet performance) on a wet road surface is decreased. It is difficult to well balance rolling resistance and wet performance. Various studies have been made in order to achieve reduction of rolling resistance and improvement of wet performance (for example, Japanese Laid-Open Patent Publication No. 2017-210044).

For example, the tread of the tire disclosed in Japanese Laid-Open Patent Publication No. 2017-210044 includes three layers stacked in the radial direction. Among these three layers, a first layer (hereinafter, also referred to as a cap layer) located on the outer side is formed from a rubber for which wet performance is taken into consideration and that is most likely to generate heat. A third layer (hereinafter, also referred to as a base layer) located on the inner side is formed from a rubber for which rolling resistance is taken into consideration and that is least likely to generate heat. A second layer (hereinafter, also referred to as an intermediate layer) located between the first layer and the third layer is formed from a rubber that is less likely to generate heat than the first layer and that is more likely to generate heat than the third layer.

From consideration for the environment, further reduction of the rolling resistance of tires is required. When the above-described intermediate layer is formed from a rubber that is less likely to generate heat than the conventional rubber, it is possible to reduce rolling resistance. However, the rubber that is less likely to generate heat has a lower grip force. When the intermediate layer is formed from the rubber that is less likely to generate heat, the difference between the grip force of the cap layer and the grip force of the intermediate layer is increased. In this case, there is a concern that wet performance may be significantly decreased when the tread becomes worn and a ground-contact surface that comes into contact with a road surface is changed from the cap layer to the intermediate layer.
Document JP 2015 131599 A discloses a tire according to the preamble of claim 1. Documents CN 103 287 214 B, US 10 946 700 B2, EP 0 358 491 B1, US 8 336 589 B2, JP 2009 241918 A, WO 2004/024471 A1 and US 2006/048874 A1 disclose further tires.

Starting from a tire as disclosed in JP 2015 131599 A, an object of the present invention is to provide a tire that can achieve reduction of rolling resistance while preventing a significant decrease in wet performance due to wear.

### SUMMARY OF THE INVENTION

A tire according to an aspect of the present invention includes a tread configured to come into contact with a road surface. The tread includes a cap layer, an intermediate layer having a loss tangent at 30°C lower than a loss tangent at 30°C of the cap layer, and a base layer having a loss tangent at 30°C lower than the loss tangent at 30°C of the intermediate layer. Of both ends of the tread, an end located on an outer side in a width direction of the vehicle is a first end, and an end located on an inner side in the width direction of the vehicle is a second end. The tread includes a first tread located on the first end side and a second tread located on the second end side. The first tread includes a first outer layer, an interposed layer located inward of the first outer layer in a radial direction, and a first inner layer located inward of the interposed layer in the radial direction. The second tread includes a second outer layer and a second inner layer located inward of the second outer layer in the radial direction. The first outer layer is composed of the cap layer. In the first tread, a ratio of a thickness of the first outer layer to a total thickness of the thickness of the first outer layer and a thickness of the interposed layer is not less than 0.50 and not greater than 0.70. A direction of the tread with respect to a vehicle is designated. The interposed layer and the second outer layer are composed of the intermediate layer. The first inner layer and the second inner layer are composed of the base layer.

Preferably, in the tire, at least three circumferential grooves are formed on the tread so as to be aligned in an axial direction, and, among the at least three circumferential grooves, a circumferential groove located on an outer side in the axial direction is a shoulder circumferential groove. The shoulder circumferential groove is formed on the first tread.

Preferably, in the tire, a ratio of the loss tangent at 30°C of the intermediate layer to the loss tangent at 30°C of the cap layer is not less than 0.50 and not greater than 0.70.

Preferably, in the tire, a ground-contact surface obtained when a load that is 70% of a normal load is applied as a vertical load to the tire and the tire is brought into contact with a road surface formed as a flat surface, in a state where the tire is fitted on a normal rim, an internal pressure of the tire is adjusted to 230 kPa, and a camber angle of the tire is set to -1°, is a standard ground-contact surface. A ground-contact length measured at a position corresponding to a width that is 80% of a ground-contact width of the standard ground-contact surface is a standard ground-contact length, a standard ground-contact length on the first end side is a first standard ground-contact length, and a standard ground-contact length on the second end side is a second standard ground-contact length. A ratio of the first standard ground-contact length to the second standard ground-contact length is not less than 0.60 and not greater than 0.90.

Preferably, in the tire, in a meridian cross-section of the tire in a state where the tire is fitted on a normal rim, an internal pressure of the tire is adjusted to 230 kPa, and no load is applied to the tire, an outer surface of the tire includes a tread surface and a pair of side surfaces connected to ends of the tread surface. A contour of the tread surface includes a curved contour line passing through an equator of the tire and composed of an arc. A radius of the curved contour line is not less than 500 mm and not greater than 1000 mm.

Preferably, in the tire, the first tread includes a terminal portion penetrating the interposed layer and the first inner layer. The terminal portion has conductivity.

According to the present invention, a tire that can achieve reduction of rolling resistance while preventing a significant decrease in wet performance due to wear is obtained.

### BRIEF DESCRIPTION OF THE DRAWINGS

FIG. 1 is a cross-sectional view showing a part of a tire according to an embodiment of the present invention;
FIG. 2 is an enlarged cross-sectional view showing a contour of a shoulder portion of the tire;
FIG. 3 is an enlarged cross-sectional view showing a part of a tread;
FIG. 4 is an image diagram illustrating a camber angle of the tire;
FIG. 5 is an image diagram illustrating a standard ground-contact length of a standard ground-contact surface;
FIG. 6 is a cross-sectional view showing a contour of a tread surface;
FIG. 7 is a cross-sectional view showing a part of a tire according to another embodiment of the present invention;
FIG. 8 is a cross-sectional view showing a part of a tire of Comparative Example 1; and
FIG. 9 is a cross-sectional view showing a part of a tire of Comparative Example 2.

### DETAILED DESCRIPTION

Hereinafter, the present invention will be described in detail based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state. A state where a tire is fitted on a normal rim, the internal pressure of the tire is adjusted to 230 kPa, and no load is applied to the tire is referred to as a standard state.

In the present disclosure, unless otherwise specified, the dimensions and angles of each component of the tire are measured in the normal state. The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between left and right beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

The normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present disclosure, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present disclosure, a conductive rubber means a crosslinked rubber having a volume resistivity less than 1.0×10⁸ Ω·cm. A non-conductive rubber means a crosslinked rubber having a volume resistivity of 1.0×10⁸ Ω·cm or higher. The conductivity of a rubber is usually controlled on the basis of the content of carbon black. The main component of a reinforcing agent in a conductive rubber is carbon black, and the main component of a reinforcing agent in a non-conductive rubber is silica.

In the present disclosure, in the case where the rubber composition contains silica and carbon black as a reinforcing agent, when a blending ratio of silica represented as the ratio of the blending amount of silica to the total amount of the reinforcing agent represented as the sum of the blending amount of silica and the blending amount of carbon black is not less than 50% by mass, silica is the main component of the reinforcing agent.

In the present disclosure, the blending amount of each chemical is represented as parts by mass of the chemical per 100 parts by mass of the base rubber.

In the present disclosure, the volume specific resistivity of a component formed from a crosslinked rubber, of the components included in the tire, is measured under the condition that the temperature of the component is 25°C, according to the Guarded-electrode system specified in JIS K6271. For this measurement, a sheet (thickness = 2 mm) obtained by pressurizing and heating a rubber composition, which is used for forming the component to be measured, at a temperature of 170°C for 12 minutes is used.

In the present disclosure, a loss tangent (also referred to as tanδ), at a temperature of 30°C, of a component formed from a crosslinked rubber, of the components included in the tire, is measured using a viscoelasticity spectrometer (EPLEXOR series manufactured by NETZSCH-Gerätebau GmbH) under the following conditions according to the standards of JIS K6394.
Initial strain = 10%
Dynamic strain = 1%
Frequency = 10 Hz
Deformation mode = tension

In this measurement, a test piece (length = 20 mm, width = 4 mm, thickness = 1 mm) is sampled from the tire. In this sampling, the length direction of the test piece is caused to coincide with the circumferential direction of the tire, and the thickness direction of the test piece is caused to coincide with the radial direction of the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

In the present disclosure, a LAT abrasion index is an index for evaluating the abrasion resistance of a component formed from a crosslinked rubber, of the components included in the tire. The higher the LAT abrasion index is, the better the abrasion resistance of the component to be evaluated is.

The LAT abrasion index corresponds to the abrasion resistance index specified in JIS K6264, and is represented as the ratio of an abrasion volume of a reference sample to an abrasion volume of the sample to be evaluated. The abrasion volume is measured, for example, using an abrasion tester (LAT100 abrasion tester manufactured by VMI) under the conditions of a load of 40 N and a slip angle of 6°. The reference sample is set as appropriate according to the component to be evaluated.

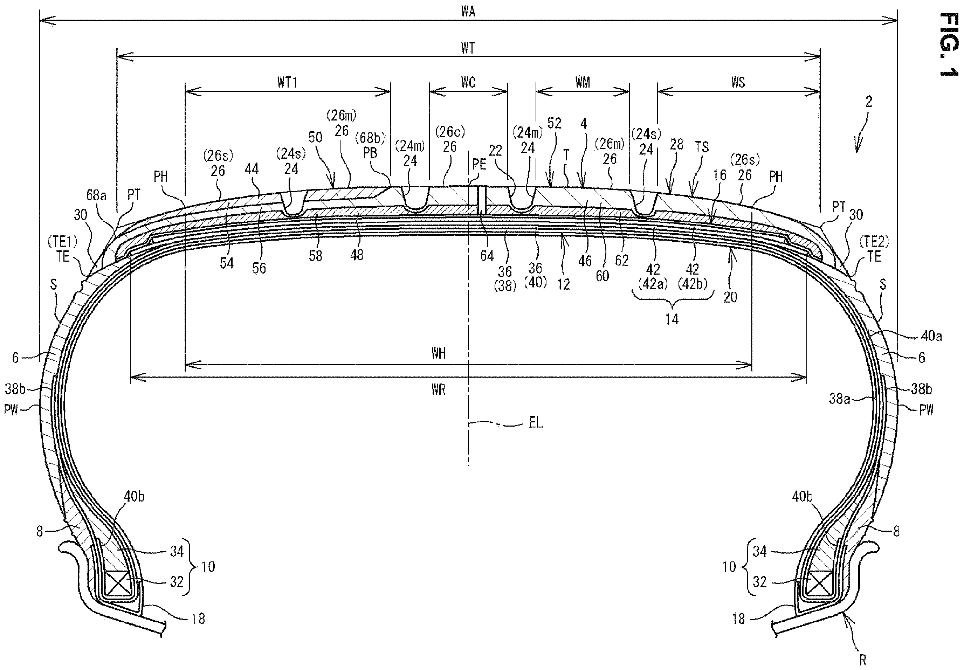

FIG. 1 shows a part of a tire 2 according to an embodiment of the present invention. The tire 2 is a tire for a passenger car. FIG. 1 shows a part of a cross-section (hereinafter, also referred to as a meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2.

In FIG. 1, an alternate long and short dash line EL represents the equator plane of the tire 2. The tire 2 is symmetrical about the equator plane EL except for a tread pattern and decorations such as patterns and letters formed on the outer surface thereof and the internal configuration of a tread described later.

In FIG. 1, the tire 2 is fitted on a rim R. The rim R is a normal rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

In FIG. 1, a position indicated by reference character PW is an outer end in the axial direction of the tire 2. In the case where decorations such as patterns and letters are present on the outer surface of the tire 2, the outer end PW is specified on the basis of a virtual outer surface obtained on the assumption that the decorations are not present.

In FIG. 1, a length indicated by reference character WA is the maximum width of the tire 2, that is, the cross-sectional width (see JATMA or the like) of the tire 2. The cross-sectional width WA of the tire 2 is the distance in the axial direction from one outer end PW to the other outer end PW. Each outer end PW is a position (hereinafter, referred to as a maximum width position) at which the tire 2 has the maximum width. The cross-sectional width WA is measured in the tire 2 in the standard state.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 comes into contact with a road surface at the outer surface thereof. Grooves 22 are formed on the tread 4. Accordingly, a tread pattern is formed.

The grooves 22 forming the tread pattern includes circumferential grooves 24 continuously extending in the circumferential direction. In the tire 2, at least three circumferential grooves 24 are formed on the tread 4 so as to be aligned in the axial direction. Accordingly, at least four land portions 26 are formed in the tread 4. In the tire 2 shown in FIG. 1, five land portions 26 are formed by forming four circumferential grooves 24 on the tread 4.

The tread 4 of the tire 2 includes a tread body 28 and a pair of wings 30. Each wing 30 is located outward of the tread body 28 in the axial direction. The wing 30 joins the tread body 28 and the sidewall 6. The wing 30 is formed from a crosslinked rubber for which adhesiveness is taken into consideration.

In FIG. 1, a position indicated by reference character TE is an end of the tread 4. In the tire 2, the direction of the tread 4 with respect to a vehicle is designated. The end TE of the tread 4 located on the left side in the surface of the drawing sheet of FIG. 1 is a first end TE1, and the end TE of the tread 4 located on the right side therein is a second end TE2. When the tire 2 is mounted on the vehicle, the first end TE1 of the tread 4 of both ends TE of the tread 4 is located on the outer side in the width direction of the vehicle. The second end TE2 of the tread 4 is located on the inner side in the width direction of the vehicle.

In FIG. 1, a position indicated by reference character PE corresponds to the equator of the tire 2. The equator PE is the point of intersection of the outer surface of the tread 4 and the equator plane EL. In the case where the groove 22 is present on the equator plane EL, the equator PE is specified on the basis of a virtual outer surface of the tread 4 obtained on the assumption that the groove 22 is not provided.

In FIG. 1, a position indicated by reference character PH is a position on the outer surface of the tread 4. The position PH corresponds to an outer end in the axial direction of a ground-contact surface of the tire 2 that is in contact with a road surface.

The ground-contact surface for specifying the position PH is obtained, for example, using a ground-contact surface shape measuring device (not shown). The ground-contact surface is obtained when a load that is 70% of the normal load is applied as a vertical load to the tire 2 in the standard state and the tire 2 is brought into contact with a road surface formed as a flat surface, with a camber angle of the tire 2 being set to 0°, on this device. Although not shown, in the tire 2, the ground-contact surface obtained as described above is a reference ground-contact surface, and the position, on the outer surface of the tread 4, corresponding to each outer end in the axial direction of the reference ground-contact surface is the above-described position PH. In the tire 2, the position PH is a reference ground-contact end. In FIG. 1, a length indicated by reference character WH is the ground-contact width of the reference ground-contact surface. The ground-contact width WH is the distance in the axial direction from one reference ground-contact end PH to the other reference ground-contact end PH. The ground-contact width WH is measured on the reference ground-contact surface.

Each sidewall 6 is connected to the end TE of the tread 4. The sidewall 6 is located inward of the tread 4 in the radial direction. The sidewall 6 extends from the end TE of the tread 4 toward the clinch 8 along the carcass 12. The sidewall 6 is formed from a crosslinked rubber for which cut resistance is taken into consideration.

Each clinch 8 is located inward of the sidewall 6 in the radial direction. The clinch 8 comes into contact with the rim R. The clinch 8 is formed from a crosslinked rubber for which abrasion resistance is taken into consideration.

Each bead 10 is located inward of the clinch 8 in the axial direction. The bead 10 includes a core 32 and an apex 34. Although not shown, the core 32 includes a wire made of steel.

The apex 34 is located outward of the core 32 in the radial direction. The apex 34 is tapered outward. The apex 34 is formed from a crosslinked rubber that has high stiffness.

The carcass 12 is located inward of the tread 4, the pair of sidewalls 6, and the pair of clinches 8. The carcass 12 extends on and between one bead 10 and the other bead 10. The carcass 12 has a radial structure.

The carcass 12 includes at least one carcass ply 36. The carcass 12 of the tire 2 is composed of two carcass plies 36. The carcass ply 36 located radially inward on the inner side of the tread 4 is a first carcass ply 38, and the carcass ply 36 located outward of the first carcass ply 38 is a second carcass ply 40. From the viewpoint of weight reduction, the carcass 12 may be composed of one carcass ply 36.

The first carcass ply 38 includes a first ply body 38a which extends on and between one core 32 and the other core 32, and a pair of first turned-up portions 38b which are connected to the first ply body 38a and turned up around the respective cores 32 from the inner side toward the outer side in the axial direction.

The second carcass ply 40 includes a second ply body 40a which extends on and between one core 32 and the other core 32, and a pair of second turned-up portions 40b which are connected to the second ply body 40a and turned up around the respective cores 32 from the inner side toward the outer side in the axial direction.

Each carcass ply 36 includes a large number of carcass cords aligned with each other, which are not shown. Each carcass cord intersects the equator plane EL. The carcass cords are cords formed from an organic fiber. Examples of the organic fiber include nylon fibers, rayon fibers, polyester fibers, and aramid fibers.

The belt 14 is located inward of the tread 4 in the radial direction. The belt 14 is stacked on the carcass 12 from the outer side in the radial direction. In FIG. 1, a length indicated by reference character WR is the width in the axial direction of the belt 14. The width WR in the axial direction is the distance in the axial direction from one end of the belt 14 to the other end of the belt 14. In the tire 2, the width WR in the axial direction of the belt 14 is not less than 65% and not greater than 85% of the cross-sectional width WA.

The belt 14 includes at least two layers 42 stacked in the radial direction. The belt 14 of the tire 2 is composed of two layers 42 stacked in the radial direction. Of the two layers 42, the layer 42 located on the inner side is an inner layer 42a, and the layer 42 located on the outer side is an outer layer 42b. As shown in FIG. 1, the inner layer 42a is wider than the outer layer 42b. The length from the end of the outer layer 42b to the end of the inner layer 42a is not less than 3 mm and not greater than 10 mm.

Each of the inner layer 42a and the outer layer 42b includes a large number of belt cords aligned with each other, which are not shown. Each belt cord is inclined relative to the equator plane EL. The material of each belt cord is steel.

The band 16 is located between the tread 4 and the belt 14 in the radial direction. The band 16 is stacked on the belt 14 on the inner side of the tread 4.

The band 16 includes a helically wound band cord which is not shown. The band cord extends substantially in the circumferential direction. Specifically, an angle of the band cord with respect to the circumferential direction is not greater than 5°. The band 16 has a jointless structure. In the tire 2, a cord formed from an organic fiber is used as the band cord. Examples of the organic fiber include nylon fibers, rayon fibers, polyester fibers, and aramid fibers.

In the tire 2, the band 16 is formed as a full band in which both ends oppose each other across the equator PE. The band 16 is wider than the belt 14. The length from the end of the belt 14 to the end of the band 16 is not less than 3 mm and not greater than 7 mm. The band 16 covers the entirety of the belt 14. The band 16 may include a pair of edge bands that are spaced apart from each other in the axial direction and cover the ends of the full band and the ends of the belt 14. The band 16 may be composed of a pair of edge bands only.

Each chafer 18 is located radially inward of the bead 10. The chafer 18 comes into contact with the rim R. The chafer 18 of the tire 2 includes a fabric and a rubber with which the fabric is impregnated.

The inner liner 20 is located inward of the carcass 12. The inner liner 20 forms an inner surface of the tire 2. The inner liner 20 is formed from a crosslinked rubber that has a low gas permeability coefficient. The inner liner 20 maintains the internal pressure of the tire 2.

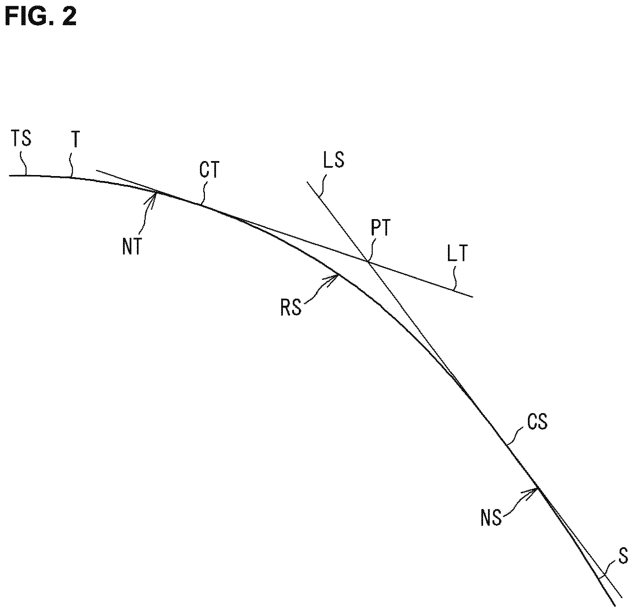

FIG. 2 shows a part of the tire 2 shown in FIG. 1. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

FIG. 2 shows a contour of a shoulder portion of the tire 2 in the meridian cross-section. The contour shown in FIG. 2 is obtained by measuring the outer surface shape of the tire 2 in the standard state by a displacement sensor. FIG. 2 shows a contour of the outer surface of the tire 2 in the meridian cross-section of the tire 2 in the standard state.

In the meridian cross-section, the contour of the outer surface (hereinafter, referred to as a tire outer surface TS) of the tire 2 is formed by connecting a plurality of contour lines each formed as a straight line or an arc. In the present disclosure, the contour line formed as a straight line or an arc is referred to simply as a contour line. The contour line formed as a straight line is referred to as a straight contour line, and the contour line formed as an arc is referred to as a curved contour line.

The tire outer surface TS includes a tread surface T and a pair of side surfaces S connected to the ends of the tread surface T. In the meridian cross-section, the contour of the tread surface T includes a plurality of curved contour lines having different radii. In the tire 2, among the plurality of curved contour lines included in the contour of the tread surface T, a curved contour line having the smallest radius is located at the end portion of the tread surface T and is connected to the side surface S. In the meridian cross-section, the contour of the tire outer surface TS includes, on each end portion of the tread surface T, a curved line portion that is a curved contour line connected to the side surface S and formed as an arc having the smallest radius among the plurality of curved contour lines included in the contour of the tread surface T. In FIG. 2, the curved line portion is indicated by reference character RS.

In the contour of the tire outer surface TS, the curved line portion RS is tangent to a contour line (hereinafter, referred to as inner adjacent contour line NT) adjacent to the curve line portion RS on the inner side in the axial direction, at a contact point CT. The curved line portion RS is tangent to a contour line (hereinafter, referred to as outer adjacent contour line NS) that is adjacent to the curve line portion RS on the outer side in the axial direction and forms a contour of the side surface S, at a contact point CS. The contour of the tire outer surface TS includes the inner adjacent contour line NT which is located axially inward of the curved line portion RS and is tangent to the curved line portion RS, and the outer adjacent contour line NS which is located axially outward of the curved line portion RS and is tangent to the curved line portion RS.

In FIG. 2, a solid line LT is a line tangent to the curved line portion RS at the contact point CT between the inner adjacent contour line NT and the curved line portion RS. A solid line LS is a line tangent to the curved line portion RS at the contact point CS between the outer adjacent contour line NS and the curved line portion RS. A position indicated by reference character PT is the point of intersection of the tangent line LT and the tangent line LS. In the tire 2, the point of intersection PT is a tread reference end.

In FIG. 1, a length indicated by a double-headed arrow WT is a tread width. The tread width WT is the distance in the axial direction from one tread reference end PT to the other tread reference end PT. In the tire 2, the ratio (WT/WA) of the tread width WT to the cross-sectional width WA is not less than 70% and not greater than 90%. The ratio of the ground-contact width WH of the reference ground-contact surface to the tread width WT is not less than 70% and not greater than 90%.

As described above, the four circumferential grooves 24 are formed on the tread 4 of the tire 2. In the tire 2, the arrangement, the groove depths, and the groove widths of the four circumferential grooves 24 are not particularly limited. As the arrangement, the groove depths, and the groove widths of the circumferential grooves of the tire, a typical arrangement, groove depth, and groove width are applied to the tread 4.

In the tire 2, among the four circumferential grooves 24, the circumferential groove 24 located on each outer side in the axial direction is a shoulder circumferential groove 24s. The circumferential groove 24 located inward of the shoulder circumferential groove 24s is a middle circumferential groove 24m. In the tire 2, the four circumferential grooves 24 include a pair of shoulder circumferential grooves 24s and a pair of middle circumferential grooves 24m. The pair of shoulder circumferential grooves 24s and the pair of middle circumferential grooves 24m are located symmetrically with respect to the equator plane EL. These circumferential grooves 24 may be located asymmetrically with respect to the equator plane EL.

As described above, the five land portions 26 are formed in the tread 4 of the tire 2. Among the five land portions 26, the land portion 26 located on each outer side in the axial direction is a shoulder land portion 26s. The land portion 26 located inward of the shoulder land portion 26s in the axial direction is a middle land portion 26m. The land portion 26 located between the left and right middle land portions 26m is a center land portion 26c. The center land portion 26c is located on the equator plane EL.

In FIG. 1, a length indicated by a double-headed arrow WC is the width in the axial direction of the center land portion 26c. The width WC in the axial direction is represented as the distance in the axial direction from the boundary between the middle circumferential groove 24m and the outer surface of the center land portion 26c on the first end TE1 side to the boundary between the middle circumferential groove 24m and the outer surface of the center land portion 26c on the second end TE2 side. A length indicated by a double-headed arrow WM is the width in the axial direction of the middle land portion 26m. The width WM in the axial direction is represented as the distance in the axial direction from the boundary between the middle circumferential groove 24m and the outer surface of the middle land portion 26m to the boundary between the shoulder circumferential groove 24s and the outer surface of the middle land portion 26m. A length indicated by a double-headed arrow WS is the width in the axial direction of the shoulder land portion 26s. The width WS in the axial direction is represented as the distance in the axial direction from the boundary between the shoulder circumferential groove 24s and the outer surface of the shoulder land portion 26s to the tread reference end PT.

In the tire 2, from the viewpoint of well balancing steering stability and drainage performance, the ratio (WC/WT) of the width WC in the axial direction of the center land portion 26c to the tread width WT is preferably not less than 0.08 and not greater than 0.20. The ratio (WS/WT) of the width WS in the axial direction of the shoulder land portion 26s to the tread width WT is preferably not less than 0.20 and not greater than 0.30. The ratio (WM/WT) of the width WM in the axial direction of the middle land portion 26m to the tread width WT is set in consideration of the ratio (WC/WT) and the ratio (WS/WT).

The tread 4 (specifically, the tread body 28) of the tire 2 includes a cap layer 44, an intermediate layer 46, and a base layer 48. The cap layer 44, the intermediate layer 46, and the base layer 48 are formed from crosslinked rubbers having different heat generation properties, respectively. In the tire 2, a loss tangent LTm at 30°C of the intermediate layer 46 is lower than a loss tangent LTc at 30°C of the cap layer 44. A loss tangent LTb at 30°C of the base layer 48 is lower than the loss tangent LTm at 30°C of the intermediate layer 46. In the tire 2, the cap layer 44 is most likely to generate heat and contributes to exertion of the grip force of the tire 2. The base layer 48 is least likely to generate heat and contributes to reduction of the rolling resistance of the tire 2.

The intermediate layer 46 of the tire 2 has heat generation properties between the heat generation properties of the cap layer 44 and the heat generation properties of the base layer 48. When the intermediate layer 46 is formed so as to have a loss tangent LTm close to the loss tangent LTc of the cap layer 44, the tread 4 that places importance on exertion of a grip force is obtained. When the intermediate layer 46 is formed so as to have a loss tangent LTm close to the loss tangent LTb of the base layer 48, the tread 4 that places importance on reduction of rolling resistance is obtained.

As shown in FIG. 1, the tread body 28 of the tire 2 is formed as a laminated body including three layers on the first end TE1 side, and is formed as a laminated body including two layers on the second end TE2 side. In the tire 2, a portion including the laminated body including three layers on the first end TE1 side is a first tread 50, and a portion including the laminated body including two layers on the second end TE2 side is a second tread 52. The tread 4 includes the first tread 50 located on the first end TE1 side and the second tread 52 located on the second end TE2 side.

In FIG. 1, a position indicated by reference character PB is the boundary between the first tread 50 and the second tread 52 in the tread surface T. In FIG. 1, a length indicated by a double-headed arrow WT1 is the distance in the axial direction from the reference ground-contact end PH on the first end TE1 side to the boundary PB.

The first tread 50 includes a first outer layer 54, an interposed layer 56, and a first inner layer 58. The outer surface of the first outer layer 54 forms a part of the above-described tread surface T. The interposed layer 56 is located inward of the first outer layer 54 in the radial direction. The first inner layer 58 is located inward of the interposed layer 56 in the radial direction. As shown in FIG. 1, the first outer layer 54 is stacked on the interposed layer 56. The interposed layer 56 is stacked on the first inner layer 58. The first inner layer 58 is stacked on the band 16.

The second tread 52 includes a second outer layer 60 and a second inner layer 62. The outer surface of the second outer layer 60 forms a part of the above-described tread surface T. The second inner layer 62 is located inward of the second outer layer 60 in the radial direction. As shown in FIG. 1, the second outer layer 60 is stacked on the second inner layer 62. The second inner layer 62 is stacked on the band 16.

In the tire 2, the first outer layer 54 of the first tread 50 is composed of the cap layer 44. The interposed layer 56 of the first tread 50 and the second outer layer 60 of the second tread 52 are composed of the intermediate layer 46. The first inner layer 58 of the first tread 50 and the second inner layer 62 of the second tread 52 are composed of the base layer 48.

In the tire 2, the second tread 52 includes a terminal portion 64 formed from a conductive rubber. The terminal portion 64 penetrates the second outer layer 60 and the second inner layer 62 of the second tread 52. The outer end of the terminal portion 64 forms a part of the tread surface T. The inner end of the terminal portion 64 is connected to the band 16. The terminal portion 64 contributes to ensuring the conductivity of the tire 2.

As described above, the tread 4 comes into contact with a road surface and contributes to exertion of a grip force. As for the contribution to the grip force of the tread 4, the contribution of the first end TE1 side of the tread 4 is higher than the contribution of the second end TE2 side of the tread 4.

The tread surface T of the tire 2 includes a portion formed by the intermediate layer 46 which is disadvantageous for exerting a grip force. However, in the tire 2, the first outer layer 54 of the first tread 50 on the first end TE1 side is composed of the cap layer 44 for which exertion of a grip force is taken into consideration. In the tire 2, even though the tread surface T includes the portion formed by the intermediate layer 46 which is disadvantageous for exerting a grip force, the tread 4 contributes to exertion of a grip force. In the tire 2, good wet performance is ensured. Since the tread 4 including, as a large portion, the intermediate layer 46 which can contribute to reduction of rolling resistance can be formed, the tire 2 can reduce the rolling resistance.

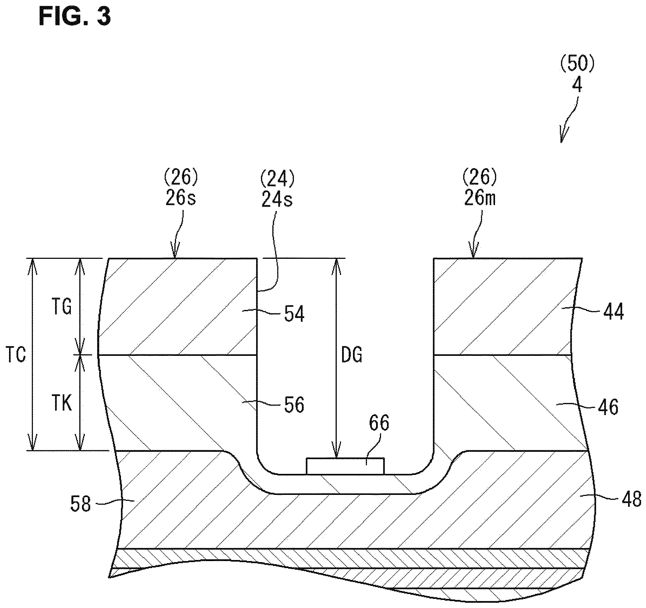

As shown in FIG. 1, in the tire 2, among the four circumferential grooves 24 formed on the tread 4, the shoulder circumferential groove 24s located on the outer side in the axial direction is formed on the first tread 50. FIG. 3 shows a part of a cross-section of the tire 2 shown in FIG. 1. In FIG. 3, a portion at the shoulder circumferential groove 24s formed on the first tread 50 is shown. A slip sign 66 (also referred to as a wear indicator) is provided on the bottom of the shoulder circumferential groove 24s.

In FIG. 3, a double-headed arrow TG indicates the thickness of the first outer layer 54. A double-headed arrow TK indicates the thickness of the interposed layer 56. A double-headed arrow TC indicates the total thickness of the thickness TG of the first outer layer 54 and the thickness TK of the interposed layer 56. The thickness TG of the first outer layer 54, the thickness TK of the interposed layer 56, and the total thickness TC are measured at a portion where a change in the thickness of each layer is suppressed, in a zone from the boundary between the outer surface of the land portion 26 and the circumferential groove 24 (in other words, the edge of the circumferential groove 24) to a position away by 5 mm therefrom. In the case where a plurality of circumferential grooves 24 are formed on the first tread 50, the thickness of the first outer layer 54, the thickness of the interposed layer 56, and the total thickness thereof are measured at each circumferential groove 24, and the thickness TG of the first outer layer 54, the thickness TK of the interposed layer 56, and the total thickness TC are represented on the basis of the average values of these measured thicknesses.

In the tire 2, in the first tread 50, the ratio (TG/TC) of the thickness TG of the first outer layer 54 to the total thickness TC of the thickness TG of the first outer layer 54 and the thickness TK of the interposed layer 56 is not less than 0.50 and not greater than 0.70.

Since the ratio (TG/TC) is not less than 0.50, a sufficient thickness of the first outer layer 54 which contributes to exertion of a grip force is ensured. In the tire 2, a significant decrease in wet performance due to wear is suppressed. From this viewpoint, the ratio (TG/TC) is preferably not less than 0.53 and more preferably not less than 0.55.

Since the ratio (TG/TC) is not greater than 0.70, the thickness of the interposed layer 56 composed of the intermediate layer 46 which contributes to reduction of rolling resistance is effectively ensured. In the tire 2, the influence of the first outer layer 54, which is composed of the cap layer 44 which is likely to generate heat, on rolling resistance is suppressed. From this viewpoint, the ratio (TG/TC) is preferably not greater than 0.67 and more preferably not greater than 0.65.

In the tire 2, the first tread 50 on the first end TE1 side includes the first outer layer 54 composed of the cap layer 44, and the ratio (TG/TC) of the thickness TG of the first outer layer 54 to the total thickness TC of the thickness TG of the first outer layer 54 and the thickness TK of the interposed layer 56 is not less than 0.50 and not greater than 0.70. The tire 2 can achieve reduction of rolling resistance while preventing a significant decrease in wet performance due to wear.

In FIG. 3, a double-headed arrow DG indicates the groove depth of the circumferential groove 24. The groove depth DG is represented as the distance from the tread surface T to the slip sign 66. The groove depth DG is also referred to as an effective groove depth.

In the tire 2, from the viewpoint of well balancing wet performance and rolling resistance, the ratio (TC/DG) of the total thickness TC of the thickness TG of the first outer layer 54 and the thickness TK of the interposed layer 56 to the groove depth DG of the circumferential groove 24 is preferably not less than 0.80 and not greater than 1.00.

As shown in FIG. 1, in the tire 2, the position of the end of the first outer layer 54 on the first end TE1 side (hereinafter, a first end 68a of the first outer layer 54) is located outward of the reference ground-contact end PH in the axial direction. The position of the first end 68a of the first outer layer 54 substantially coincides with the position of the tread reference end PT in the axial direction. The first end 68a of the first outer layer 54 may be located inward of the tread reference end PT in the axial direction. In this case, from the viewpoint of effectively exhibiting wet performance, the distance in the axial direction from the tread reference end PT to the first end 68a of the first outer layer 54 is preferably not greater than 5 mm. The first end 68a of the first outer layer 54 may be located outward of the tread reference end PT in the axial direction. In this case, the position of the first end 68a of the first outer layer 54 is determined in consideration of the influence on wet performance and rolling resistance.

As shown in FIG. 1, in the tire 2, among the four circumferential grooves 24 formed on the tread 4, the shoulder circumferential groove 24s located on the outer side in the axial direction is formed on the first tread 50. The boundary PB between the first tread 50 and the second tread 52, that is, the end of the first outer layer 54 located on the second end TE2 side (hereinafter, referred to as a second end 68b of the first outer layer 54), is located inward of the shoulder circumferential groove 24s located on the first end TE1 side, in the axial direction.

As described above, in the tire 2, the position of the first end 68a of the first outer layer 54 substantially coincides with the position of the tread reference end PT in the axial direction. Of the tread 4, the portion between the tread reference end PT and the shoulder circumferential groove 24s is the shoulder land portion 26s. In the tire 2, the outer surface of the shoulder land portion 26s on the first end TE1 side, whose degree of contribution to a grip force is high, is generally formed by the first outer layer 54. In the tire 2, good wet performance is ensured.

In the tire 2, it is possible to control wet performance and rolling resistance by adjusting the position of the boundary PB between the first tread 50 and the second tread 52. The rolling resistance of the tire 2 can be reduced by making the boundary PB closer to the first end TE1 of the tread 4. From this viewpoint, the ratio (WT1/WH) of the distance WT1 in the axial direction from the reference ground-contact end PH on the first end TE1 side to the boundary PB to the ground-contact width WH of the reference ground-contact surface is preferably not greater than 95% and more preferably not greater than 85%. On the other hand, the wet performance of the tire 2 can be improved by making the boundary PB closer to the second end TE2 of the tread 4. From this viewpoint, the ratio (WT1/WH) is preferably not less than 30% and more preferably not less than 40%. From the viewpoint of well balancing wet performance and rolling resistance, the ratio (WT1/WH) is particularly preferably not less than 55% and not greater than 75%.

As described above, the loss tangent LTm at 30°C of the intermediate layer 46 is lower than the loss tangent LTc at 30°C of the cap layer 44. Specifically, the ratio (LTm/LTc) of the loss tangent LTm at 30°C of the intermediate layer 46 to the loss tangent LTc at 30°C of the cap layer 44 is preferably not less than 0.50 and not greater than 0.70.

When the ratio (LTm/LTc) is set to be not less than 0.50, the difference between the grip force of the cap layer 44 and the grip force of the intermediate layer 46 is effectively reduced. In the tire 2, a significant decrease in wet performance due to wear is suppressed. From this viewpoint, the ratio (LTm/LTc) is more preferably not less than 0.53 and further preferably not less than 0.55.

When the ratio (LTm/LTc) is set to be not greater than 0.70, the intermediate layer 46 can effectively contribute to reduction of rolling resistance. From this viewpoint, the ratio (LTm/LTc) is preferably not greater than 0.67 and more preferably not greater than 0.65.

In the tire 2, the loss tangent LTb at 30°C of the base layer 48 is preferably not greater than 0.11. This is because the base layer 48 effectively contributes to reduction of rolling resistance. From this viewpoint, the loss tangent LTb is more preferably not greater than 0.10 and further preferably not greater than 0.09. In the tire 2, it is more preferable if the loss tangent LTb of the base layer 48 is lower, and thus a preferable lower limit is not set.

The loss tangent LTm at 30°C of the intermediate layer 46 is preferably not greater than 0.15. This is because the intermediate layer 46 effectively contributes to reduction of rolling resistance. From this viewpoint, the loss tangent LTm is more preferably not greater than 0.14 and further preferably not greater than 0.13. The loss tangent LTm at 30°C of the intermediate layer 46 is preferably not less than 0.11. This is because the intermediate layer 46 can ensure required stiffness and can effectively contribute to improvement of wet performance. From this viewpoint, the loss tangent LTm is more preferably not less than 0.12.

The loss tangent LTc at 30°C of the cap layer 44 is preferably not less than 0.15. This is because the cap layer 44 can contribute to improvement of wet performance. From this viewpoint, the loss tangent LTc is more preferably not less than 0.16 and further preferably not less than 0.17. The cap layer 44 comes into contact with a road surface. From the viewpoint of improvement of wet performance, it is more preferable if the loss tangent LTc is higher. However, a higher loss tangent LTc causes heat generation. There is a concern that the heated cap layer 44 may raise the temperature of the intermediate layer 46 more than expected. From the viewpoint of being able to stably keep the temperature of the entirety of the tread 4 and maintain low rolling resistance, the loss tangent LTc at 30°C of the cap layer 44 is preferably not greater than 0.30, more preferably not greater than 0.28, and further preferably not greater than 0.27.

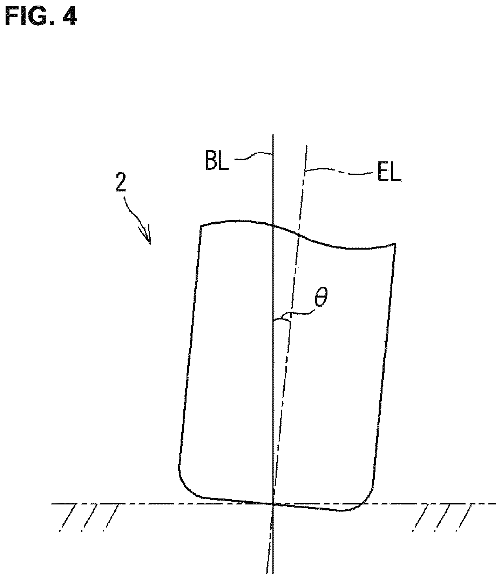

FIG. 4 shows a state of the tire 2 mounted on a vehicle (not shown). On the surface of the drawing sheet of FIG. 4, the left side is the outer side in the width direction of the vehicle, and the right side is the inner side in the width direction of the vehicle.

As shown in FIG. 4, the tire 2 is usually mounted on the vehicle such that the equator plane EL thereof is inclined relative to a road surface. In FIG. 4, a solid line indicated by reference character BL is a straight line orthogonal to a flat road surface. An angle θ is an angle of the equator plane EL with respect to the straight line BL. The angle θ is also referred to as a camber angle. The tire 2 shown in FIG. 4 is mounted on the vehicle such that an upper portion of the equator plane EL is located inward of a lower portion of the equator plane EL in the width direction of the vehicle. The camber angle of the tire 2 mounted as described above is also referred to as a negative camber, and represented by a negative angle.

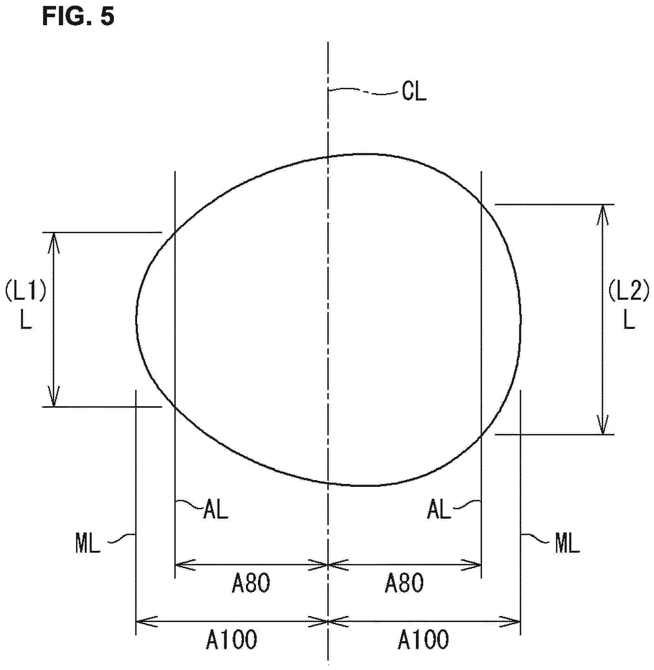

FIG. 5 shows an image of a ground-contact surface of the tire 2. In FIG. 5, the up-down direction corresponds to the circumferential direction of the tire 2, and the right-left direction corresponds to the axial direction of the tire 2. On the surface of the drawing sheet of FIG. 5, the left side is the outer side in the width direction of the vehicle, that is, the first end TE1 side of the tread 4. On this surface of the drawing sheet, the right side is the inner side in the width direction of the vehicle, that is, the second end TE2 side of the tread 4.

The ground-contact surface is obtained, for example, using a ground-contact surface shape measuring device (not shown). The ground-contact surface is obtained when a load that is 70% of the normal load is applied as a vertical load to the tire 2 in the standard state and the tire 2 is brought into contact with a road surface formed as a flat surface, with the camber angle θ of the tire 2 being set to -1°, on this device. In the present disclosure, the ground-contact surface is a standard ground-contact surface.

In FIG. 5, an alternate long and short dash line CL is a center line in the axial direction of the standard ground-contact surface. Each solid line ML is a straight line that passes through an outer end in the axial direction of the standard ground-contact surface and is parallel to the center line CL. Each solid line AL is a straight line that is located between the straight line ML and the center line CL and is parallel to the straight line ML and the center line CL. Each double-headed arrow A100 represents the distance in the axial direction from the center line CL to the straight line ML. The distance A100 corresponds to half the maximum ground-contact width of the standard ground-contact surface. Each double-headed arrow A80 represents the distance in the axial direction from the center line CL to the straight line AL. In the tire 2, the ratio of the distance A80 to the distance A100 is set to 80%. That is, the straight line AL represents a position corresponding to a width that is 80% of the maximum ground-contact width of the standard ground-contact surface. Each double-headed arrow L represents the length of a line of intersection between a plane including the straight line AL and the standard ground-contact surface. The length L of the line of intersection is a ground-contact length measured at a position corresponding to a width that is 80% of the ground-contact width of the standard ground-contact surface, and is also referred to as a standard ground-contact length. The standard ground-contact length L on the first end TE1 side is a first standard ground-contact length L1, and the standard ground-contact length L on the second end TE2 side is a second standard ground-contact length L2.

In the tire 2, the ratio (L1/L2) of the first standard ground-contact length L1 to the second standard ground-contact length L2 is preferably not less than 0.60 and not greater than 0.90.

When the ratio (L1/L2) is set to be not less than 0.60, a change in a ground-contact shape with respect to alignment is effectively suppressed. Since a stable ground-contact shape is obtained, the occurrence of uneven wear is suppressed. The tire 2 can achieve reduction of rolling resistance while preventing a significant decrease in wet performance due to wear. From this viewpoint, the ratio (L1/L2) is more preferably not less than 0.65 and further preferably not less than 0.70.

When the ratio (L1/L2) is set to be not greater than 0.90, the tread 4 can sufficiently exert its function. In the tire 2, cornering stability and straight running stability are well balanced. The tire 2 can exhibit good wet performance while maintaining low rolling resistance. From this viewpoint, the ratio (L1/L2) is more preferably not greater than 0.85 and further preferably not greater than 0.80.

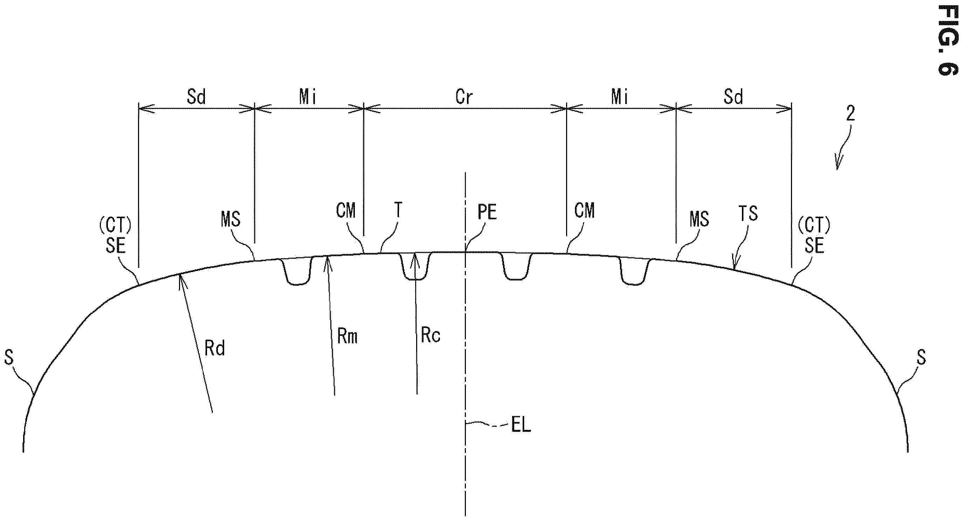

FIG. 6 shows a part of the tire 2 shown in FIG. 1. In FIG. 6, the right-left direction is the axial direction of the tire 2, and the up-down direction is the radial direction of the tire 2. The direction perpendicular to the surface of the drawing sheet of FIG. 6 is the circumferential direction of the tire 2.

FIG. 6 shows a contour of the tread surface T of the tire 2 in the meridian cross-section. Similar to the contour shown in FIG. 2, the contour shown in FIG. 6 is obtained by measuring the outer surface shape of the tire 2 in the standard state by a displacement sensor. FIG. 6 shows a contour of the tread surface T of the tire 2 in the meridian cross-section of the tire 2 in the standard state.

The tread surface T of the tire 2 is divided into a plurality of regions aligned in the axial direction in the meridian cross-section. The plurality of regions include a crown region Cr, a pair of middle regions Mi, and a pair of side regions Sd. The crown region Cr is located at the center in the axial direction. The crown region Cr includes the equator PE. Each middle region Mi is located outward of the crown region Cr in the axial direction. Each side region Sd is located outward of the middle region Mi in the axial direction.

In FIG. 6, a position indicated by reference character CM is the boundary between the crown region Cr and the middle region Mi. A position indicated by reference character MS is the boundary between the middle region Mi and the side region Sd. Reference character SE indicates the outer end of the side region Sd. The outer end SE is also the above-described contact point CT.

As described above, the contour of the tread surface T includes a plurality of curved contour lines having different radii. The contour of each region is represented by a curved contour line. In the tire 2, the curved contour line that represents the contour of the crown region Cr is also referred to as a center contour line. The curved contour line that represents the contour of the middle region Mi is also referred to as a middle contour line. The curved contour line that represents the contour of the side region Sd is also referred to as a side contour line. The plurality of curved contour lines included in the contour of the tread surface T include a center contour line, a pair of middle contour lines, and a pair of side contour lines.

Although not shown, the center of the center contour line is located on the equator plane EL. In FIG. 6, a one-sided arrow indicated by reference character Rc indicates the radius of the center contour line. Each middle contour line is tangent to the center contour line at the boundary CM. In FIG. 6, a one-sided arrow indicated by reference character Rm indicates the radius of the middle contour line. Each side contour line is tangent to the middle contour line at the boundary MS. In FIG. 6, a one-sided arrow indicated by reference character Rd indicates the radius of the side contour line.

In the tire 2, the radius Rm of each middle contour line is smaller than the radius Rc of the center contour line, and the radius Rd of each side contour line is smaller than the radius Rm of each middle contour line. Accordingly, the respective contour lines are smoothly connected, and the tread 4 that can sufficiently exert its function is formed. In the tire 2, cornering stability and straight running stability are well balanced. From this viewpoint, the ratio (Rm/Rc) of the radius Rm of the middle contour line to the radius Rc of the center contour line is preferably not less than 0.50 and preferably not greater than 0.54. The ratio (Rd/Rc) of the radius Rd of the side contour line to the radius Rc of the center contour line is preferably not less than 0.20 and preferably not greater than 0.24.

In the tire 2, the radius Rc of the center contour line is preferably not less than 500 mm and not greater than 1000 mm. Accordingly, a ground-contact shape in which the ratio (L1/L2) of the first standard ground-contact length L1 to the second standard ground-contact length L2 is set within the above-described range is obtained. Since the tread 4 can sufficiently exert its function, the tire 2 can achieve reduction of rolling resistance while preventing a significant decrease in wet performance due to wear. From this viewpoint, the radius Rc of the center contour line is more preferably not less than 550 mm and further preferably not less than 600 mm. The radius Rc of the center contour line is more preferably not greater than 950 mm and further preferably not greater than 900 mm. In the tire 2, the radius of an arc that has a center on the equator plane EL and passes through the left and right edges of the center land portion 26c and the equator PE is used as the radius Rc of the center contour line. In a tread having a circumferential groove formed on the equator plane, the radius of an arc that has a center on the equator plane and passes through edges of land portions located on both sides of the circumferential groove is used as the radius Rc of the center contour line.

In the tire 2, in the first tread 50, the cap layer 44 and the intermediate layer 46 coexist. If there is a difference between the abrasion resistance of the cap layer 44 and the abrasion resistance of the intermediate layer 46, there is a concern that a difference may occur between abrasion amounts of the cap layer 44 and the intermediate layer 46. In this case, a step may be formed around the boundary between the cap layer 44 and the intermediate layer 46, and the appearance of the tire 2 may be impaired. From the viewpoint of maintaining good appearance, a LAT abrasion index LATc of the cap layer 44 and a LAT abrasion index LATm of the intermediate layer 46 are preferably substantially equal to each other. Specifically, the difference (LATc - LATm) between the LAT abrasion index LATc of the cap layer 44 and the LAT abrasion index LATm of the intermediate layer 46 is preferably not less than -10 and not greater than 10. The difference (LATc - LATm) is more preferably not less than -5 and not greater than 5. The difference (LATc - LATm) is further preferably 0.

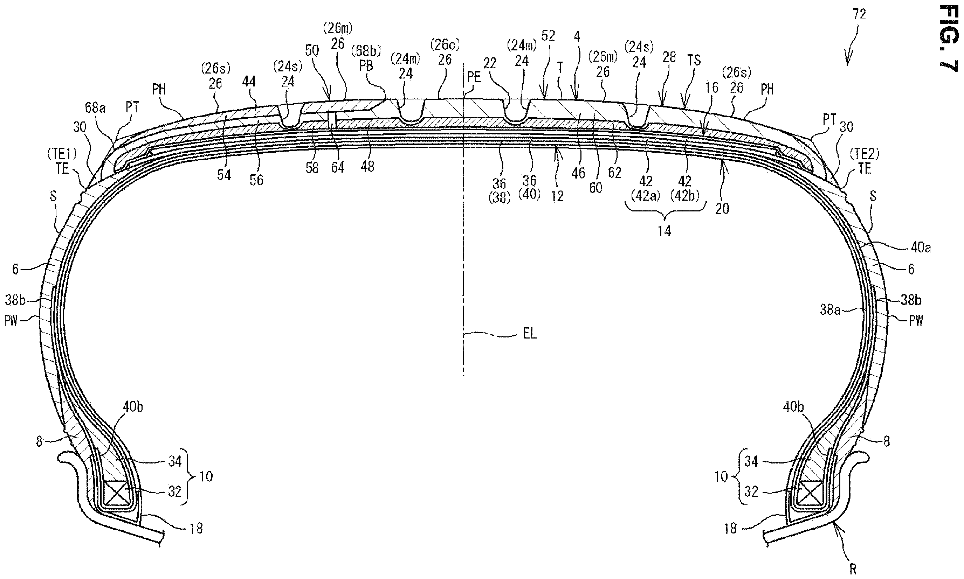

FIG. 7 shows a part of a tire 72 according to another embodiment of the present invention. FIG. 7 shows a meridian cross-section of the tire 72. In FIG. 7, the right-left direction is the axial direction of the tire 72, and the up-down direction is the radial direction of the tire 72. The direction perpendicular to the surface of the drawing sheet of FIG. 7 is the circumferential direction of the tire 72.

The tire 72 has the same configuration as that of the tire 2 shown in FIG. 1, except that the arrangement of the terminal portion 64 of the tire 2 shown in FIG. 1 is different. Therefore, in FIG. 7, components that are the same as the components of the tire 2 in FIG. 1 are designated by the same reference characters, and the description thereof is omitted.

Similar to the tread 4 of the tire 2 shown in FIG. 1, the tread 4 of the tire 72 also includes a first tread 50 and a second tread 52. Whereas the terminal portion 64 is provided in the second tread 52 in the tire 2 shown in FIG. 1, the terminal portion 64 is provided in the first tread 50 in the tire 72. As shown in FIG. 7, the terminal portion 64 penetrates the interposed layer 56 and the first inner layer 58. The outer end of the terminal portion 64 is connected to the first outer layer 54. The inner end of the terminal portion 64 is connected to the band 16.

As described above, the first outer layer 54 is composed of the cap layer 44. Although not described in detail, from the viewpoint of exerting a high grip force, a reinforcing agent of a rubber composition for the cap layer 44 contains carbon black as a main component. Therefore, the cap layer 44 has conductivity. In other words, the cap layer 44 is formed from a conductive rubber. Since the first outer layer 54 and the band 16 are connected by the terminal portion 64, conductivity is ensured in the tire 72, similar to the tire 2 shown in FIG. 1. Since the outer end of the terminal portion 64 is covered with the first outer layer 54, the terminal portion 64 of the tire 72 is not exposed in the tread surface T. Therefore, a deterioration in the appearance quality of the tread 4 due to the terminal portion 64 is suppressed until the first outer layer 54 becomes worn and disappears. Even if the tread 4 becomes worn, the appearance state thereof is kept good. Since a stable ground-contact shape is obtained even if the tread 4 is worn, the tread 4 can sufficiently exert its function. The tire 72 can achieve reduction of rolling resistance while preventing a deterioration in appearance quality and a significant decrease in wet performance due to wear.

As described above, according to the present invention, a tire that can achieve reduction of rolling resistance while preventing a significant decrease in wet performance due to wear is obtained.

### EXAMPLES

### [Example 1]

A pneumatic tire for a passenger car (tire size = 235/55R19) having the basic structure shown in FIG. 1 and having specifications shown in Table 1 below was obtained.

A tread including a cap layer, a base layer, and an intermediate layer and having the structure shown in FIG. 1 was used. The loss tangent LTc at 30°C of the cap layer was 0.25. The loss tangent LTm at 30°C of the intermediate layer was 0.15. The ratio (LTm/LTc) of the loss tangent LTm to the loss tangent LTc was 0.60. The loss tangent LTb at 30°C of the base layer was 0.10.

In the first tread, the ratio (TG/TC) of the thickness TG of the first outer layer to the total thickness TC of the thickness TG of the first outer layer and the thickness TK of the interposed layer was 0.60. The ratio (TC/DG) of the total thickness TC to the groove depth DG of the circumferential groove was 0.95. A shoulder circumferential groove was formed on the first tread, and the ratio (WT1/WH) of the distance WT1 in the axial direction from the reference ground-contact end PH on the first end TE1 side to the boundary PB to the ground-contact width WH of the reference ground-contact surface was 65%.

The ratio (L1/L2) of the first standard ground-contact length L1 to the second standard ground-contact length L2 was 0.75. The radius Rc of the center contour line was 700 mm. The terminal portion was provided in the second tread.

### [Comparative Example 1]

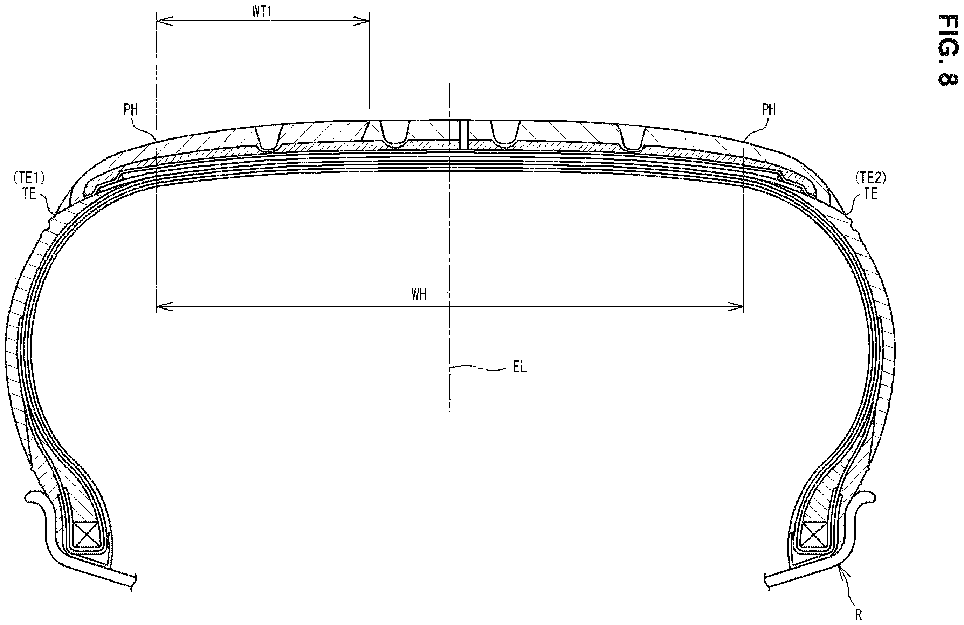

A tire of Comparative Example 1 was obtained in the same manner as Example 1, except that a tread having the structure shown in FIG. 8 was used. The tread of Comparative Example 1 includes a cap layer, an intermediate layer, and a base layer. A first tread in which the cap layer was stacked on the base layer was formed on the first end TE1 side, and a second tread in which the intermediate layer was stacked on the base layer was formed on the second end TE2 side.

The materials of the cap layer and the base layer are the same as the materials of the cap layer and the base layer of Example 1. The loss tangent LTm of the intermediate layer was changed by changing the rubber material, and the ratio (LTm/LTc) was set as shown in Table 1 below.

The ratio (WT1/WH) of the distance WT1 in the axial direction from the reference ground-contact end PH on the first end TE1 side to the boundary PB to the ground-contact width WH of the reference ground-contact surface was 30%.

The ratio (L1/L2) of the first standard ground-contact length L1 to the second standard ground-contact length L2 was 0.50. The radius Rc of the center contour line was 450 mm.

The ratio of the thickness of the cap layer to the effective groove depth of the circumferential groove was 0.95. The ratio of the thickness of the intermediate layer to the effective groove depth of the circumferential groove was 0.95.

### [Comparative Example 2]

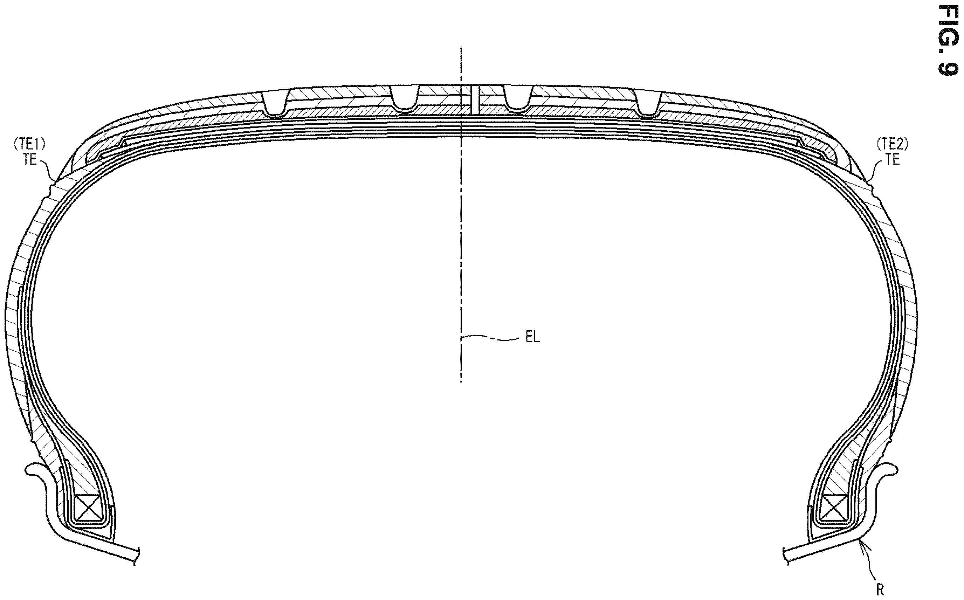

A tire of Comparative Example 2 was obtained in the same manner as Example 1, except that a tread having the structure shown in FIG. 9 was used. The tread of Comparative Example 2 includes a cap layer, an intermediate layer, and a base layer. The materials of the cap layer, the intermediate layer, and the base layer are the same as the materials of the cap layer, the intermediate layer, and the base layer of Comparative Example 1.

In Comparative Example 2, the cap layer, the intermediate layer, and the base layer were stacked in the radial direction, and the entirety of the tread was formed as a laminated body including these three layers.

The ratio of the thickness of the cap layer to the total thickness of the thickness of the cap layer and the thickness of the intermediate layer was 0.75. This is indicated in the cell for "TG/TC" in Table 1 below. The ratio of the total thickness of the thickness of the cap layer and the thickness of the intermediate layer to the effective groove depth of the circumferential groove was 0.95.

The ratio (L1/L2) of the first standard ground-contact length L1 to the second standard ground-contact length L2 was 0.50. The radius Rc of the center contour line was 450 mm.

### [Comparative Examples 3 and 4]

Tires of Comparative Examples 3 and 4 were obtained in the same manner as Example 1, except that the ratio (TG/TC) was set as shown in Table 1 below.

### [Examples 2 and 3]

Tires of Examples 2 and 3 were obtained in the same manner as Example 1, except that the radius Rc and the ratio (L1/L2) were set as shown in Table 2 below.

### [Example 4]

A tire of Example 4 was obtained in the same manner as Example 1, except that the terminal portion was disposed as shown in FIG. 7.

### [Rolling Resistance Coefficient (RRC)]

Using a rolling resistance testing machine, a rolling resistance coefficient (RRC) was measured when a test tire ran on a drum at a speed of 80 km/h under the following conditions. The results are shown as indexes in Table 1 below with the result of Comparative Example 1 being regarded as 100. The higher the value is, the lower the rolling resistance of the tire is. In this evaluation, if the index exceeds 100, it is determined that reduction of rolling resistance is achieved.
Rim: 19×7.5J
Internal pressure: 210 kPa
Vertical load: 6.47 kN

### [Wet Performance (WET) of New Tires]

New test tires were fitted to rims (size = 19×7.5J) and inflated with air to adjust the internal pressures of the tires to 230 kPa. The tires were mounted to a test vehicle (passenger car having an engine displacement of 2000 cm³). The test vehicle was driven on a test course with a wet road surface (water film thickness = 1.4 mm) so as to perform steady cornering, and the limit speed was measured. The results are shown as indexes in the cells for "WET (NEW)" in Tables 1 and 2 below with the result of Comparative Example 1 being regarded as 100. The higher the value is, the higher the limit speed is and the better the wet performance of the tire is.

### [Change in Wet Performance Due to Wear]

New test tires were fitted to rims (size = 19×7.5J) and inflated with air to adjust the internal pressures of the tires to 230 kPa. The tires were mounted to a test vehicle (passenger car having an engine displacement of 2000 cm³). The test vehicle was driven on a test course with a dry asphalt road surface to wear the tread of each tire. The tread was worn until the groove depth of the circumferential groove reached 50% of the groove depth of the new tire. Then, the test vehicle was driven on a test course with a wet road surface (water film thickness = 1.4 mm) so as to perform steady cornering, and the limit speed was measured. A change in wet performance due to wear was evaluated on the basis of the difference between this limit speed and the limit speed obtained in the new state. The results are shown as indexes in the cells for "Performance change" in Tables 1 and 2 below with the result of Comparative Example 1 being regarded as 100. The higher the value is, the more the reduction of wet performance due to wear is suppressed.

### [Appearance of Worn Tires]

New test tires were fitted to rims (size = 19×7.5J) and inflated with air to adjust the internal pressures of the tires to 230 kPa. The tires were mounted to a test vehicle (passenger car having an engine displacement of 2000 cm³). The test vehicle was driven on a test course with a dry asphalt road surface to wear the tread of each tire. The tread was worn until the groove depth of the circumferential groove reached 50% of the groove depth of the new tire. Then, the worn state of the tread was visually confirmed. The results are shown as indexes in the cells for "Appearance" in Tables 1 and 2 below. A higher value represents that better wear appearance is obtained. This evaluation was performed on Example 1 and Example 4.

**[Table 1]**

| | Comparative Example 1 | Comparative Example 2 | Comparative Example 3 | Example 1 | Comparative Example 4 |
|---|---|---|---|---|---|
| Structure | FIG. 8 | FIG. 9 | FIG. 1 | FIG. 1 | FIG. 1 |
| Rc [mm] | 450 | 450 | 700 | 700 | 700 |
| L1/L2 [-] | 0.50 | 0.50 | 0.75 | 0.75 | 0.75 |
| WT1/WH [%] | 30 | - | 65 | 65 | 65 |
| TG/TC [-] | - | 0.75 | 0.45 | 0.60 | 0.75 |
| LTm/LTc [-] | 0.75 | 0.75 | 0.60 | 0.60 | 0.60 |
| RRC | 100 | 95 | 109 | 107 | 98 |
| WET (NEW) | 100 | 105 | 103 | 103 | 103 |
| Performance change | 100 | 95 | 90 | 103 | 103 |
| Appearance | - | - | - | 100 | - |

**[Table 2]**

| | Example 2 | Example 3 | Example 4 |
|---|---|---|---|
| Structure | FIG. 1 | FIG. 1 | FIG. 7 |
| Rc [mm] | 450 | 1050 | 700 |
| L1/L2 [-] | 0.50 | 0.95 | 0.75 |
| WT1/WH [%] | 65 | 65 | 65 |
| TG/TC [-] | 0.60 | 0.60 | 0.60 |
| LTm/LTc [-] | 0.60 | 0.60 | 0.60 |
| RRC | 105 | 102 | 107 |
| WET (NEW) | 103 | 103 | 103 |
| Performance change | 103 | 103 | 105 |
| Appearance | - | - | 103 |

As shown in Tables 1 and 2, it is confirmed that, in each Example, it is possible to achieve reduction of rolling resistance while preventing a significant decrease in wet performance due to wear. From the evaluation results, advantages of the present invention are clear.

The above-described technology capable of achieving reduction of rolling resistance while preventing a significant decrease in wet performance due to wear can also be applied to various tires.

## Claims

1. A tire (2, 72) comprising a tread (4) configured to come into contact with a road surface, wherein
the tread (4) includes a cap layer (44), an intermediate layer (46) having a loss tangent (Ltm) at 30°C lower than a loss tangent (Ltc) at 30°C of the cap layer (44), and a base layer (48) having a loss tangent (Ltb) at 30°C lower than the loss tangent (Ltm) at 30°C of the intermediate layer (46),
the loss tangent values (Ltb), (Ltc) and (Ltm) being determined according to the JIS standard K6394 at an initial strain of 10%,
a dynamic strain of 1%,
a frequency of 10Hz,
under deformation mode tension,
of both ends (TE) of the tread (4), an end located on an outer side in a width direction of the vehicle is a first end (TE1), and an end located on an inner side in the width direction of the vehicle is a second end (TE2),
the tread (4) includes a first tread (50) located on the first end (TE1) side and a second tread (52) located on the second end (TE2) side,
the first tread (50) includes a first outer layer (54), an interposed layer (56) located inward of the first outer layer (54) in a radial direction, and a first inner layer (58) located inward of the interposed layer (56) in the radial direction,
the second tread (52) includes a second outer layer (60) and a second inner layer (62) located inward of the second outer layer (60) in the radial direction,
the first outer layer (54) is composed of the cap layer (44), and
in the first tread (50), a ratio (TG/TC) of a thickness (TG) of the first outer layer (54) to a total thickness (TC) of the thickness (TG) of the first outer layer (54) and a thickness (TK) of the interposed layer (56) is not less than 0.50 and not greater than 0.70, **characterized in that**
a direction of the tread (4) with respect to a vehicle is designated,
the interposed layer (56) and the second outer layer (60) are composed of the intermediate layer (46), and
the first inner layer (58) and the second inner layer (62) are composed of the base layer (48).

2. The tire (2, 72) according to claim 1, wherein
at least three circumferential grooves (24) are formed on the tread (4) so as to be aligned in an axial direction,
among the at least three circumferential grooves (24), a circumferential groove (24) located on an outer side in the axial direction is a shoulder circumferential groove (24s), and the shoulder circumferential groove (24s) is formed on the first tread (50).

3. The tire (2, 72) according to claim 1 or 2, wherein a ratio (Ltm/Ltc) of the loss tangent (Ltm) at 30°C of the intermediate layer (46) to the loss tangent (Ltc) at 30°C of the cap layer (44) is not less than 0.50 and not greater than 0.70.

4. The tire (2, 72) according to any one of claims 1 to 3, wherein
a ground-contact surface obtained when a load that is 70% of a normal load is applied as a vertical load to the tire (2, 72) and the tire (2, 72) is brought into contact with a road surface formed as a flat surface, in a state where the tire (2, 72) is fitted on a normal rim (R), an internal pressure of the tire (2, 72) is adjusted to 230 kPa, and a camber angle (θ) of the tire (2, 72) is set to -1°, is a standard ground-contact surface,
a ground-contact length measured at a position corresponding to a width that is 80% of a ground-contact width of the standard ground-contact surface is a standard ground-contact length (L),
a standard ground-contact length (L) on the first end (TE1) side is a first standard ground-contact length (L1),
a standard ground-contact length (L) on the second end (TE2) side is a second standard ground-contact length (L2), and
a ratio of the first standard ground-contact length (L1) to the second standard ground-contact length (L2) is not less than 0.60 and not greater than 0.90.

5. The tire (2, 72) according to any one of claims 1 to 4, wherein
in a meridian cross-section of the tire (2, 72) in a state where the tire (2, 72) is fitted on a normal rim (R), an internal pressure of the tire (2, 72) is adjusted to 230 kPa, and no load is applied to the tire (2, 72), an outer surface (TS) of the tire (2, 72) includes a tread surface (T) and a pair of side surfaces (S) connected to ends of the tread surface (T),
a contour of the tread surface (T) includes a curved contour line passing through an equator (PE) of the tire (2, 72) and composed of an arc, and
a radius (Rc, Rm, Rs) of the curved contour line is not less than 500 mm and not greater than 1000 mm.

6. The tire (72) according to any one of claims 1 to 5, wherein
the first tread (50) includes a terminal portion (64) penetrating the interposed layer (56) and the first inner layer (58), and
the terminal portion (64) has conductivity.

## Patentansprüche

1. Reifen (2, 72) mit einer Lauffläche (4), die so konfiguriert ist, dass sie in Kontakt mit einer Straßenoberfläche kommt, wobei
die Lauffläche (4) eine Deckschicht (44), eine Zwischenschicht (46) mit einem Verlustfaktor (Ltm) bei 30°C, der niedriger ist als ein Verlustfaktor (Ltc) bei 30°C der Deckschicht (44), und eine Basisschicht (48) mit einem Verlustfaktor (Ltb) bei 30°C, der niedriger ist als der Verlustfaktor (Ltm) bei 30°C der Zwischenschicht (46), aufweist, wobei die Verlustfaktorwerte (Ltb), (Ltc) und (Ltm) gemäß der JIS-Norm K6394 bei einer anfänglichen Dehnung von 10 %, einer dynamischen Dehnung von 1 %, einer Frequenz von 10 Hz, unter dem Verformungsmodus Spannung bestimmt werden,
von beiden Enden (TE) der Lauffläche (4) ein Ende, das sich auf einer äußeren Seite in einer Breitenrichtung des Fahrzeugs befindet, ein erstes Ende (TE1), und ein Ende, das sich auf einer inneren Seite in der Breitenrichtung des Fahrzeugs befindet, ein zweites Ende (TE2) ist,
die Lauffläche (4) eine erste Lauffläche (50), die auf der Seite des ersten Endes (TE1) angeordnet ist, und eine zweite Lauffläche (52), die auf der Seite des zweiten Endes (TE2) angeordnet ist, aufweist,
die erste Lauffläche (50) eine erste äußere Schicht (54), eine dazwischenliegende Schicht (56), die in einer radialen Richtung innen von der ersten äußeren Schicht (54) angeordnet ist, und eine erste innere Schicht (58), die in der radialen Richtung innen von der dazwischenliegenden Schicht (56) angeordnet ist, aufweist
die zweite Lauffläche (52) eine zweite äußere Schicht (60) und eine zweite innere Schicht (62) aufweist, die in der radialen Richtung innen von der zweiten äußeren Schicht (60) angeordnet ist,
die erste äußere Schicht (54) aus der Deckschicht (44) gebildet ist, und
in der ersten Lauffläche (50) ein Verhältnis (TG/TC) einer Dicke (TG) der ersten äußeren Schicht (54) zu einer Gesamtdicke (TC) der Dicke (TG) der ersten äußeren Schicht (54) und einer Dicke (TK) der dazwischenliegenden Schicht (56) nicht weniger als 0,50 und nicht mehr als 0,70 beträgt, **dadurch gekennzeichnet, dass**
eine Richtung der Lauffläche (4) in Bezug auf ein Fahrzeug festgelegt ist,
die dazwischenliegende Schicht (56) und die zweite äußere Schicht (60) aus der Zwischenschicht (46) gebildet sind, und
die erste innere Schicht (58) und die zweite innere Schicht (62) aus der Basisschicht (48) gebildet sind.

2. Reifen (2, 72) nach Anspruch 1, wobei
zumindest drei Umfangsrillen (24) auf der Lauffläche (4) so ausgebildet sind, dass sie in einer axialen Richtung ausgerichtet sind,
unter den zumindest drei Umfangsrillen (24) eine Umfangsrille (24), die sich an einer äußeren Seite in der axialen Richtung befindet, eine Schulterumfangsrille (24s) ist, und
die Schulterumfangsrille (24s) an der ersten Lauffläche (50) ausgebildet ist.

3. Reifen (2, 72) nach Anspruch 1 oder 2, wobei ein Verhältnis (Ltm/Ltc) des Verlustfaktors (Ltm) bei 30°C der Zwischenschicht (46) zu dem Verlustfaktor (Ltc) bei 30°C der Deckschicht (44) nicht kleiner als 0,50 und nicht größer als 0,70 ist.

4. Reifen (2, 72) nach einem der Ansprüche 1 bis 3, wobei
eine Bodenkontaktfläche, die erhalten wird, wenn eine Last, die 70% einer normalen Last ist, als eine vertikale Last auf den Reifen (2, 72) aufgebracht wird und der Reifen (2, 72) in Kontakt mit einer Straßenoberfläche gebracht wird, die als eine ebene Oberfläche ausgebildet ist, in einem Zustand, in dem der Reifen (2, 72) auf eine normale Felge (R) aufgezogen ist, ein Innendruck des Reifens (2, 72) auf 230 kPa eingestellt ist und ein Sturzwinkel (θ) des Reifens (2, 72) auf -1° eingestellt ist, eine Standardbodenkontaktfläche ist,
eine Bodenkontaktlänge, die an einer Position gemessen wird, die einer Breite entspricht, die 80 % einer Bodenkontaktbreite der Standardbodenkontaktfläche beträgt, eine Standardbodenkontaktlänge (L) ist,
eine Standardbodenkontaktlänge (L) auf der Seite des ersten Endes (TE1) eine erste Standardbodenkontaktlänge (L1) ist,
eine Standardbodenkontaktlänge (L) auf der Seite des zweiten Endes (TE2) eine zweite Standardbodenkontaktlänge (L2) ist, und
ein Verhältnis der ersten Standardbodenkontaktlänge (L1) zu der zweiten Standardbodenkontaktlänge (L2) nicht kleiner als 0,60 und nicht größer als 0,90 ist.

5. Reifen (2, 72) nach einem der Ansprüche 1 bis 4, wobei
in einem Meridianquerschnitt des Reifens (2, 72) in einem Zustand, in dem der Reifen (2, 72) auf eine normale Felge (R) aufgezogen ist, ein Innendruck des Reifens (2, 72) auf 230 kPa eingestellt ist und keine Last auf den Reifen (2, 72) aufgebracht wird, eine äußere Oberfläche (TS) des Reifens (2, 72) eine Laufflächenoberfläche (T) und ein Paar von Seitenoberflächen (S), die mit den Enden der Laufflächenoberfläche (T) verbunden sind, umfasst
eine Kontur der Laufflächenoberfläche (T) eine gekrümmte Konturlinie aufweist, die durch einen Äquator (PE) des Reifens (2, 72) verläuft und aus einem Bogen gebildet ist, und
ein Radius (Rc, Rm, Rs) der gekrümmten Konturlinie nicht kleiner als 500 mm und nicht größer als 1000 mm ist.

6. Reifen (72) nach einem der Ansprüche 1 bis 5, wobei
die erste Lauffläche (50) einen Endabschnitt (64) aufweist, der die dazwischenliegende Schicht (56) und die erste innere Schicht (58) durchdringt, und
der Endabschnitt (64) eine Leitfähigkeit aufweist.

## Revendications

1. Pneumatique (2, 72) comprenant une bande de roulement (4) configurée pour venir en contact avec une surface de route ;
la bande de roulement (4) inclut une couche de couverture (44), une couche intermédiaire (46) présentant une tangente de perte (Ltm) à 30°C inférieure à une tangente de perte (Ltc) à 30°C de la couche de couverture (44), et une couche de base (48) présentant une tangente de perte (Ltb) à 30°C inférieure à la tangente de perte (Ltm) à 30°C de la couche intermédiaire (46),
les valeurs de tangente de perte (Ltb), (Ltc) et (Ltm) étant déterminées selon la norme JIS K6394 à
une contrainte initiale de 10 %,
une souche dynamique de 1 %,
une fréquence de 10 Hz,
sous tension en mode déformation,
des deux extrémités (TE) de la bande de roulement (4), une extrémité située sur un côté extérieur dans une direction de largeur du véhicule est une première extrémité (TE1), et une extrémité située sur un côté intérieur dans la direction de largeur du véhicule est une seconde extrémité (TE2),
la bande de roulement (4) inclut une première bande de roulement (50) située du côté de la première extrémité (TE1) et une seconde bande de roulement (52) située du côté de la seconde extrémité (TE2),
la première bande de roulement (50) inclut une première couche externe (54), une couche interposée (56) située vers l'intérieur de la première couche externe (54) dans une direction radiale, et une première couche interne (58) située vers l'intérieur de la couche interposée (56) dans la direction radiale,
la seconde bande de roulement (52) inclut une seconde couche externe (60) et une seconde couche interne (62) située vers l'intérieur de la seconde couche externe (60) dans la direction radiale,
la première couche externe (54) est composée de la couche de couverture (44), et
dans la première bande de roulement (50), un rapport (TG/TC) d'une épaisseur (TG) de la première couche externe (54) à une épaisseur totale (TC) de l'épaisseur (TG) de la première couche externe (54) et d'une épaisseur (TK) de la couche interposée (56) n'est pas inférieur à 0,50 et n'est pas supérieur à 0,70, **caractérisé en ce que**
une direction de la bande de roulement (4) par rapport à un véhicule est désignée,
la couche interposée (56) et la seconde couche externe (60) sont composées de la couche intermédiaire (46), et
la première couche interne (58) et la seconde couche interne (62) sont composées de la couche de base (48).

2. Pneumatique (2, 72) selon la revendication 1, dans lequel
au moins trois rainures circonférentielles (24) sont formées sur la bande de roulement (4) de manière à être alignées dans une direction axiale,
parmi les au moins trois rainures circonférentielles (24), une rainure circonférentielle (24) située sur un côté extérieur dans la direction axiale est une rainure circonférentielle d'épaule (24s), et la rainure circonférentielle d'épaule (24s) est formée sur la première bande de roulement (50).

3. Pneumatique (2, 72) selon la revendication 1 ou 2, dans lequel un rapport (Ltm/Ltc) de la tangente de perte (Ltm) à 30°C de la couche intermédiaire (46) à la tangente de perte (Ltc) à 30°C de la couche de couverture (44) n'est pas inférieur à 0,50 et n'est pas supérieur à 0,70.

4. Pneumatique (2, 72) selon l'une quelconque des revendications 1 à 3, dans lequel
une surface de contact avec le sol, obtenue lorsqu'une charge qui représente 70 % d'une charge normale est appliquée sous la forme d'une charge verticale sur le pneumatique (2, 72) et le pneumatique (2, 72) est amené en contact avec une surface de route formée sous la forme d'une surface plane, dans un état dans lequel le pneumatique (2, 72) est monté sur une jante normale (R), une pression interne du pneumatique (2, 72) est ajustée à 230 kPa, et un angle de carrossage (θ) du pneumatique (2, 72) est réglé à -1°, est une surface de contact avec le sol standard,
une longueur de contact avec le sol mesurée dans une position correspondant à une largeur qui est 80 % d'une largeur de contact avec le sol de la surface de contact avec le sol standard est une longueur de contact avec le sol standard (L),
une longueur de contact avec le sol standard (L) du côté de la première extrémité (TE1) est une première longueur de contact avec le sol standard (L1),
une longueur de contact avec le sol standard (L) du côté de la seconde extrémité (TE2) est une seconde longueur de contact avec le sol standard (L2), et
un rapport de la première longueur de contact avec le sol standard (L1) à la seconde longueur de contact avec le sol standard (L2) n'est pas inférieur à 0,60 et n'est pas supérieur à 0,90.

5. Pneumatique (2, 72) selon l'une quelconque des revendications 1 à 4, dans lequel
dans une section méridienne du pneumatique (2, 72), dans un état dans lequel le pneumatique (2, 72) est monté sur une jante normale (R), une pression interne du pneumatique (2, 72) est ajustée à 230 kPa, et aucune charge n'est appliquée au pneumatique (2, 72), une surface externe (TS) du pneumatique (2, 72) inclut une surface de bande de roulement (T) et une paire de surfaces latérales (S) reliées aux extrémités de la surface de bande de roulement (T),
un contour de la surface de bande de roulement (T) inclut une ligne de contour incurvée passant par un équateur (PE) du pneumatique (2, 72) et composée d'un arc, et
un rayon (Rc, Rm, Rs) de la ligne de contour incurvée n'est pas inférieur à 500 mm et n'est pas supérieur à 1000 mm.

6. Pneumatique (72) selon l'une quelconque des revendications 1 à 5, dans lequel
la première bande de roulement (50) inclut une partie terminale (64) pénétrant dans la couche interposée (56) et la première couche interne (58), et
la partie terminale (64) présente une conductivité.
